# EUROPEAN PATENT APPLICATION

(11) **EP 1 338 468 A2**
(43) Date of publication of application: **27.08.2003**
(21) Application number: 03003933.3
(22) Date of filing: 21.02.2003
(51) Int. Cl.: B60Q 1/02

(54) **Lighting fixture for vehicles**

(30) Priority: 26.02.2002 JP 2002050526
(71) Applicant: ICHIKOH INDUSTRIES, LTD., Tokyo 144-0022 (JP)
(72) Inventor: Okubo, Yasuhiro, Isehara-shi, Kanagawa-ken, 259-1192 (JP)
(74) Representative: Grünecker, Kinkeldey, Stockmair & Schwanhäusser Anwaltssozietät

(57) **Abstract**

A lighting fixture (4L,4R) for a vehicle (C), that illuminates a side area of a road so as to supplement the light distribution of a headlamp of the vehicle, comprising a light source (5) that is different from a light source of the headlight, a first reflecting surface (6) comprising a free-form surface approximating to a convex surface in cross section and a concave surface in longitudinal section, that reflects the light emitted by the light source so as to illuminate the side area (curve zone) with a long, slender light distribution pattern, and a second reflecting surface (7) comprising a free-form surface approximating to a concave surface in cross section and a concave surface in longitudinal section, that reflects the light emitted by the light source so as to illuminate the side area (intersection zone) with a wide light distribution pattern. As a result, visibility can be improved when driving a curved road section or when turning right or left at an intersection.

## Description

### BACKGROUND OF THE INVENTION

### 1) Field of the Invention

The present invention relates to a lighting fixture for vehicles (hereinafter "lighting fixture") that supplements light distribution of headlamps for vehicles. In the following description, the directions of up, down, left, right, front, and back have been used relative to the lighting fixture in a state that the lighting fixture if mounted on a vehicle.

### 2) Description of the Related Art

The examples of these types of lighting fixture are bending lamps, auxiliary headlamps, rain lamps, and cornering lamps. The cornering lamp is for ensuring the visibility at the time of turning to the right or left at an intersection, by illuminating the road in the direction of right turn or left turn. However, the lighting fixture for vehicles is only for ensuring the visibility at the time of turning to the right or left at an intersection, and is not for positively illuminating the aimed side areas with an aimed light-distribution pattern. A conventional cornering lamps have been disclosed in, for example, Japanese Patent Applications Laid-Open Nos. Hei 10-3806 and Hei 10-83702.

### SUMMARY OF THE INVENTION

It is an object of the present invention to provide an improved lighting fixture for vehicles.

In order to achieve the object, the present invention comprises a light source for headlamps for vehicles, an exclusive light source separate from a reflecting surface, and the reflecting surface, wherein the reflecting surface comprises a first reflecting surface and a second reflecting surface, the first reflecting surface is a reflecting surface constituted of a free-form surface that reflects the light from the light source to illuminate a curve light-distribution zone (curve zone) with a curve light-distribution pattern, and the second reflecting surface is a reflecting surface constituted of a free-form surface that reflects the light from the light source to illuminate an intersection light-distribution zone (intersection zone) with an intersection light-distribution pattern.

As a result, in the present invention, when the light source is lighted, the light from the light source is reflected by the first reflecting surface, to positively illuminate the curve light-distribution zone as the curve light-distribution pattern. Further, the light from the light source is reflected by the second reflecting surface, to positively illuminate the intersection light-distribution zone as the intersection light-distribution pattern. In this manner, with the present invention, the visibility at the time of driving a curve and at the time of turning to the right or left at an intersection can be improved, and safety can be ensured.

These and other objects, features and advantages of the present invention are specifically set forth in or will become apparent from the following detailed descriptions of the invention when read in conjunction with the accompanying drawings.

### BRIEF DESCRIPTION OF THE DRAWINGS

Fig. 1 shows three points in the ECE Standard;
Fig. 2 is a diagram in which the three points in the ECE Standard is projected in a low beam light-distribution pattern;
Fig. 3 is a diagram in which the inside lane line (center line) in the case of a right curve is projected by R280 to R30, with respect to the three points in the ECE Standard;
Fig. 4 shows an aimed curve light-distribution zone;
Fig. 5 shows an aimed intersection light-distribution zone;
Fig. 6 shows an aimed side area light-distribution zone;
Fig. 7 is a plan view of a motor vehicle equipped with the lighting fixture according to one embodiment of the present invention;
Fig. 8 is a perspective view that shows a first reflecting surface, a second reflecting surface, and a border plane;
Fig. 9 is a schematic plan view that shows the angle between the light axis of the first reflecting surface and the light axis of the second reflecting surface, and the axis of a light source;
Fig. 10 is a schematic plan view that shows the angle of inclination of the border plane and a shaded range by a top coat;
Fig. 11 shows a relative relation between the longitudinal dimension and the lateral dimension of the first reflecting surface and the second reflecting surface, and a range suitable for forming the respective light-distribution pattern by a group of filament images reflected into the respective reflecting surface;
Fig. 12 shows the respective basic filament images by means of the outer part and the inner part of a first segment and a second segment of the first reflecting surface, and a third segment of the second reflecting surface;
Fig. 13 shows the arrangement of the outer part and the inner part of the respective segments of the first reflecting surface, and the third segment of the second reflecting surface;
Fig. 14 shows a light-distribution pattern obtained by the first segment of the first reflecting surface;
Fig. 15 shows a light-distribution pattern obtained by the second segment of the first reflecting surface;
Fig. 16 shows a light-distribution pattern obtained by the third segment of the first reflecting surface;
Fig. 17 shows a curve light-distribution pattern in which the light-distribution patterns obtained by the respective segments of the first reflecting surface are combined;
Fig. 18 shows a light-distribution pattern obtained by the first segment of the second reflecting surface;
Fig. 19 shows a light-distribution pattern obtained by the second segment of the second reflecting surface;
Fig. 20 shows a light-distribution pattern obtained by the third segment of the second reflecting surface;
Fig. 21 shows an intersection light-distribution pattern in which the light-distribution patterns obtained by the respective segments of the second reflecting surface are combined;
Fig. 22 is a diagram that shows a side area light-distribution pattern in which the curve light-distribution pattern obtained by the first reflecting surface and the intersection light-distribution pattern obtained by the second reflecting surface are combined at the time of driving a curve; and
Fig. 23 is a diagram that shows a side area light-distribution pattern in which the curve light-distribution pattern obtained by the first reflecting surface and the intersection light-distribution pattern obtained by the second reflecting surface are combined at the time of turning to the right at an intersection.

### DETAILED DESCRIPTION

Exemplary embodiments of the lighting fixture for vehicles according to the present invention will be explained with reference to the accompanying drawings. However, the present invention is not limited to these embodiments.

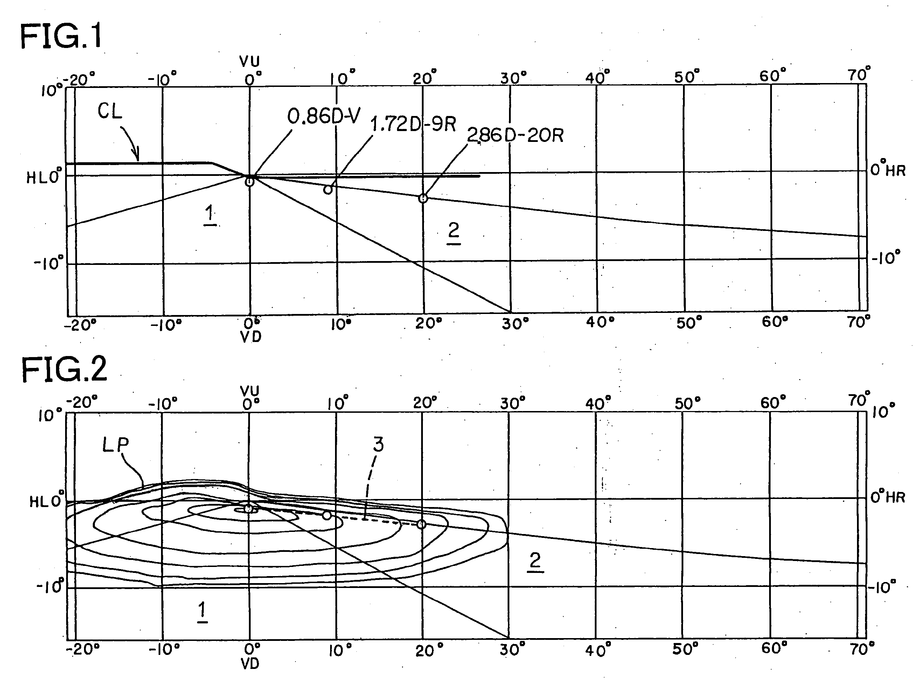

The aimed light-distribution pattern and the aimed side areas will be explained with reference to Figs. 1 to 6. The aimed side areas are light-distribution zones in the side areas illuminated by the lighting fixture of the present invention. As the aimed side areas, for example, there are a curve light-distribution zone including a curve front area, at which a driver looks at the time of driving a curve portion of a road (hereinafter "curve"), and an intersection light-distribution zone including the whole area of a pedestrian crossing and the peripheral area thereof at the time of turning to the right or left at an intersection. Further, the aimed light-distribution pattern is a light-distribution pattern for illuminating the aimed side area by the lighting fixture of the present invention. As this aimed light-distribution pattern, there are a curve light-distribution pattern for illuminating the curve light-distribution zone, and an intersection light-distribution pattern for illuminating the intersection light-distribution zone.

In Figs. 1 to 6, a line HL-HR represents a horizontal line on a screen and a line VU-VD represents a vertical line on the screen.

Figs. 1 to 6 are diagrams projected on the screen 10m ahead, as seen from the lighting fixture of the present invention equipped on the right side of the motor vehicle as an eye point. Further, Figs. 1 to 6 are for explaining an example in which the right side area is illuminated from a motor vehicle running in the left-hand traffic lane. Therefore, when the left side area is illuminated from a motor vehicle running in the right driving section, the explanation is reversed right and left. In that case, for example, αR (i.e., α degrees to the right) should be treated as αL (i.e., α degrees to the left).

An explanation is provided below in detail about the aimed curve light-distribution pattern and the curve light-distribution zone. At the time of driving a curve, it is generally desired to illuminate the vicinity where the inside lane line (or curbstone) of the curve with respect to the traveling direction and a low-beam cut line cross each other, that is, the curve front area at which the driver looks. However, it is not desired to illuminate a closer area than the curve front area with substantially the same luminous intensity at the same time, because the road illuminance in the closer area considerably increases than the road illuminance in the curve front area, due to the relation that the road illuminance is inversely proportional to the square of distance, and driver's sight are attracted to the closer area than the aimed curve front area. Therefore, at the time of driving a curve, it is desired that a high luminous intensity zone exists in the curve front area.

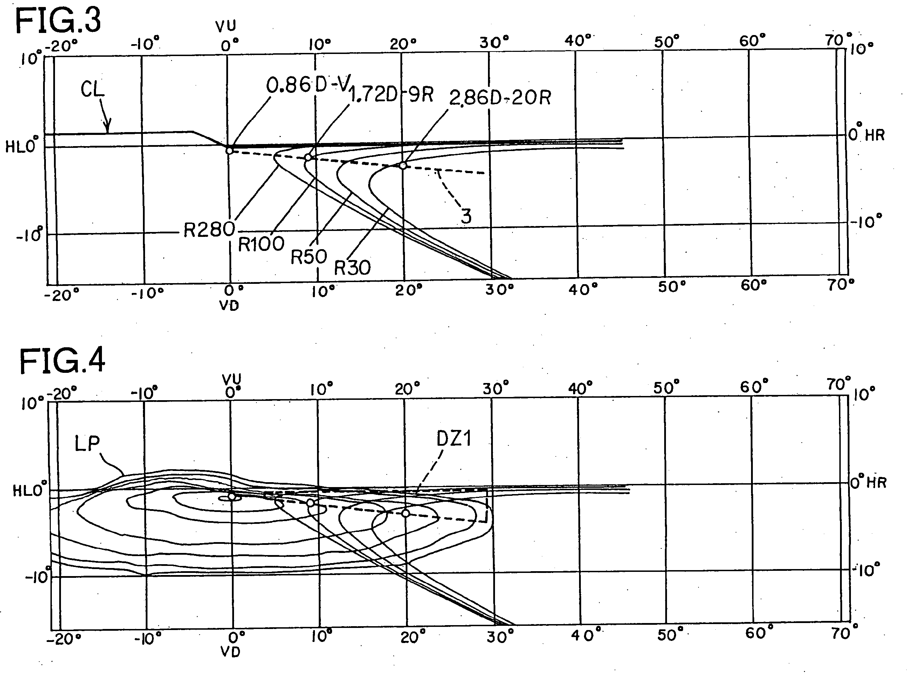

The curve front area stands for a vicinity where the inside lane line of the curve with respect to the traveling direction and a low-beam cut line cross each other. The low beam light-distribution pattern LP is explained briefly here. The low beam light-distribution pattern LP is considered based on a straight track, taking an example of three points in the ECE Standard, for example as shown in the screen of Fig. 1, a point of 0.86D-V (50m straight ahead), a point of 1.72D-9R (25m ahead at the right edge of the road), and a point of 2.86D-20R (15m ahead at the right edge of the road). In Fig. 1, CL denotes a cut line (indicated by a thick solid line), 1 denotes a lane in which the own vehicle is traveling, and 2 denotes an opposing lane. The point of 0.86D-V is an intersection of a vertical line VU-VD (0° in the right and left), and a line 0.86° down from the horizontal line HL-HR, on the screen. The point of 1.72D-9R is an intersection on the screen of a line 1.72° down from the horizontal line HL-HR, and a line 9° to the right from the vertical line VU-VD. The point of 2.86D-20R is an intersection on the screen of a line 2.86° down from the horizontal line HL-HR, and a line 20° to the right from the vertical line VU-VD. The low beam light-distribution pattern LP generally has, as shown in Fig. 2, sufficient brightness in the lower side of a line 3 (indicated by a thick dotted line) connecting the three points, but in the upper side thereof, the brightness tends to be weak. Next, the inside lane line (centerline) in the case of a right curve is projected on the screen, respectively, for R280, R100, R50 and R30, with respect to the three points. Then, as shown in Fig. 3, the curve front area at which the driver looks becomes the upper side than the line 3 connecting the three points. On the contrary, the lower side than the line 3 connecting the three points becomes the area in front of the curve.

As shown in Fig. 4, the aimed curve light-distribution zone DZ1 is a laterally long and slender delta zone or a trapezoidal zone (indicated by a thick dotted line), enclosed by the cut line CL and the line 3 connecting the three points, designating the vicinity of 5R (5° to the right from the vertical line VU-VD on the screen) as an apex or a top line. The aimed curve light-distribution pattern is a light-distribution pattern that can efficiently illuminate the curve light-distribution zone DZ1. The aimed curve light-distribution pattern and the curve light-distribution zone DZ1 are created based on R280 to R30. Here, R280 to R30 are radius of curve of driveways specified by the act of road structure in the law of Japan. The radius of curve R280 to R30 correspond to the design speeds 80 km/h to 30 km/h of the road, in the act of road structure. The design speeds 80 km/h to 30 km/h correspond to the driving speed of vehicles. Hence, the aimed curve light-distribution pattern and the curve light-distribution zone DZ1 are suitable for driving at the ordinary speed on ordinary roads, and also suitable for driving at the time of lighting low beams.

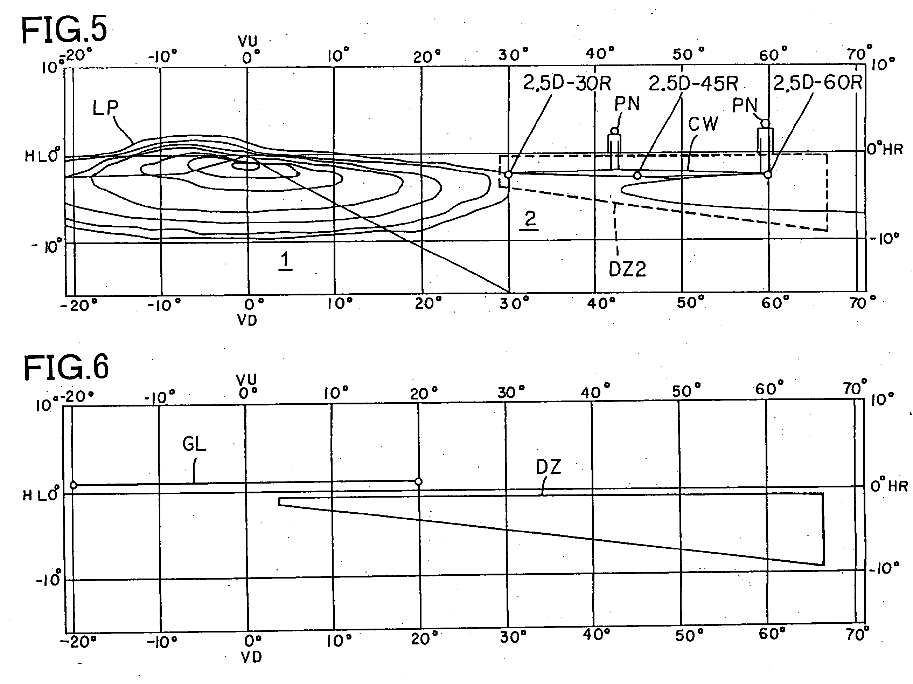

An explanation is provided below of the aimed intersection light-distribution pattern and the intersection light-distribution zone. At the time of turning to the right or left at an intersection, it is generally desired to illuminate the whole area of a pedestrian crossing and the peripheral area thereof. The intersection at the time of turning to the right is projected on the screen here, taking an example of the three points in the Society of Automotive Engineers (SAE) Standard or Australian Design Rule (ADR) Standard relating to the cornering lamp. Then, as shown in Fig. 5, the three points of a point of 2.5D-30R, a point of 2.5D-45R, and a point of 2.5D-60R form a shape covering substantially the whole area of the pedestrian crossing CW. Further, for the desired intersection light-distribution pattern and intersection light-distribution zone, it is necessary to consider the surrounding area of the pedestrian crossing CW. As described above, the aimed intersection light-distribution zone DZ2 is a trapezoidal zone (indicated by a thick dotted line), laterally long and slender extended from the pedestrian crossing CW to the side (right side) and downward, with the vertical width being wider than the curve light-distribution zone DZ1. The aimed intersection light-distribution pattern is a light-distribution pattern that can efficiently illuminate the aimed intersection light-distribution zone DZ2. In Fig. 5, PN indicates a pedestrian. The point of 2.5D-30R is an intersection on the screen, of a line 2.5° down from the horizontal line HL-HR, and a line 30° to the right from the vertical line VU-VD. The point of 2.5D-45R is an intersection on the screen, of a line 2.5° down from the horizontal line HL-HR, and a line 30° to the right from the vertical line VU-VD. The point of 2.5D-60R is an intersection on the screen, of a line 2.5° down from the horizontal line HL-HR, and a line 60° to the right from the vertical line VU-VD.

An explanation is provided below of the aimed side area light-distribution pattern and the side area light-distribution zone. The aimed side area light-distribution zone DZ is a light-distribution zone obtained by combining the aimed curve light-distribution zone DZ1 and the aimed intersection light-distribution zone DZ2. In other words, this aimed side area light-distribution zone DZ forms, as shown by a thick solid line in Fig. 6, an oblong trapezoidal zone that is long and slender laterally, and has a vertical width smaller inside and gradually increasing outward. Further, the aimed side area light-distribution pattern is a light-distribution pattern obtained by combining the aimed curve light-distribution pattern and the aimed intersection light-distribution pattern.

In other words, the aimed side area light-distribution pattern is a light-distribution pattern that can efficiently illuminate the aimed side area light-distribution zone DZ. At the time of driving a curve, it includes passing by a car running in the opposite lane, as at the time of driving a straight road. Therefore, in the curve light distribution, it is necessary not to give dazzle to the car running in the opposite lane. Therefore, in the Adaptive Frontlighting System (AFS) Standard introduced in the Economic Commission for Europe (ECE) in 2003, the glare above the low beam cut line is restricted to a line 20° to the right and left from the vertical line VU-VD on the screen (side ± 20°), and a line 0.5° upward from the horizontal line HL-HR on the screen (at least 0.5 U), and hence it is necessary to satisfy this standard.

The upper end of the curve light-distribution zone DZ1 of the inside portion, of the side area light-distribution zone DZ, is located, as shown in Fig. 4, over the range of from about 5° to 30° to the right from the vertical line VU-VD on the screen, slightly below from the horizontal line HL-HR on the screen, along the low beam cut line CL. As a result, as shown in Fig. 6, the upper end of the side area light-distribution zone DZ can clear the upper glare restriction line GL (indicated by a thick solid line), thereby the side area light-distribution zone DZ can satisfy the AFS Standard. In the low beam light-distribution pattern LP in Figs. 2, 4, and 5, the equi-luminous intensity curve of light at the center indicates 20000 candela (cd), and other curves respectively indicate 10000 cd, 5000 cd, 2000 cd, 1000 cd, 500 cd, and 300 cd toward the outside.

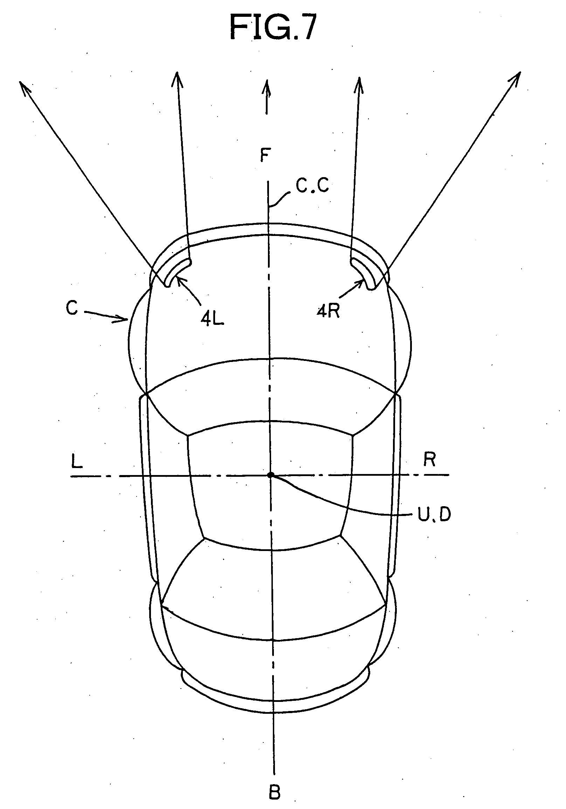

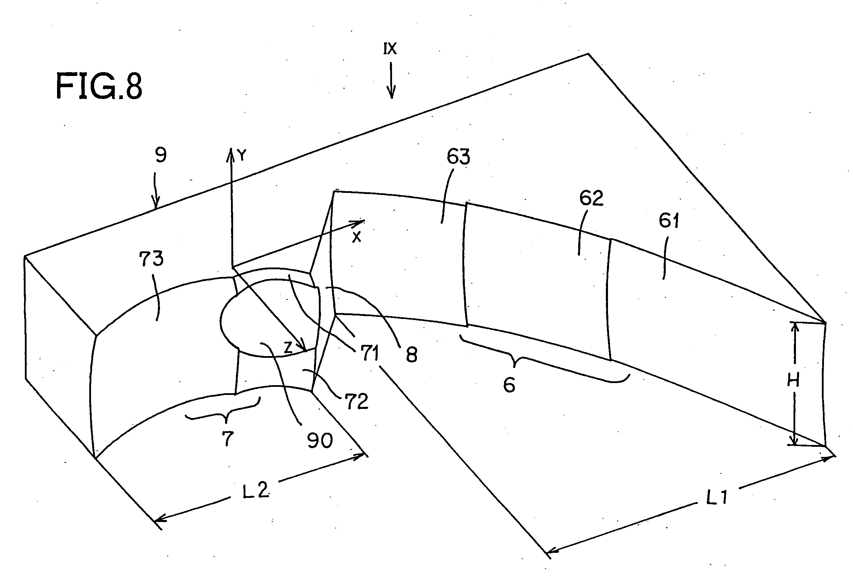

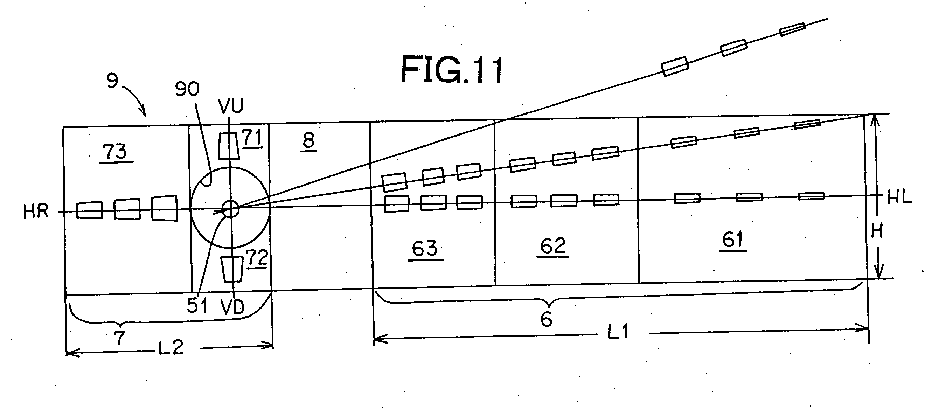

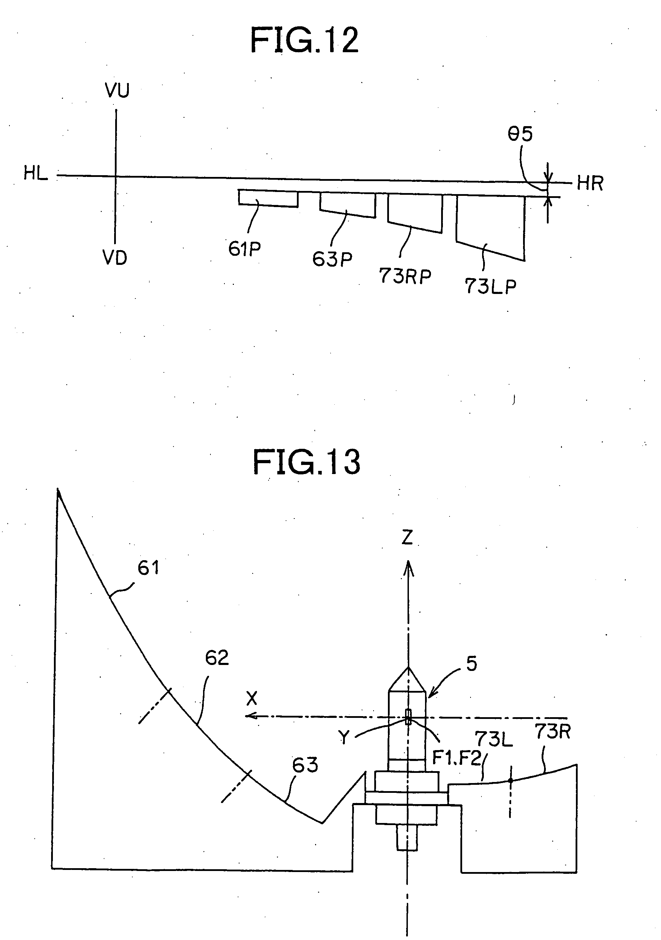

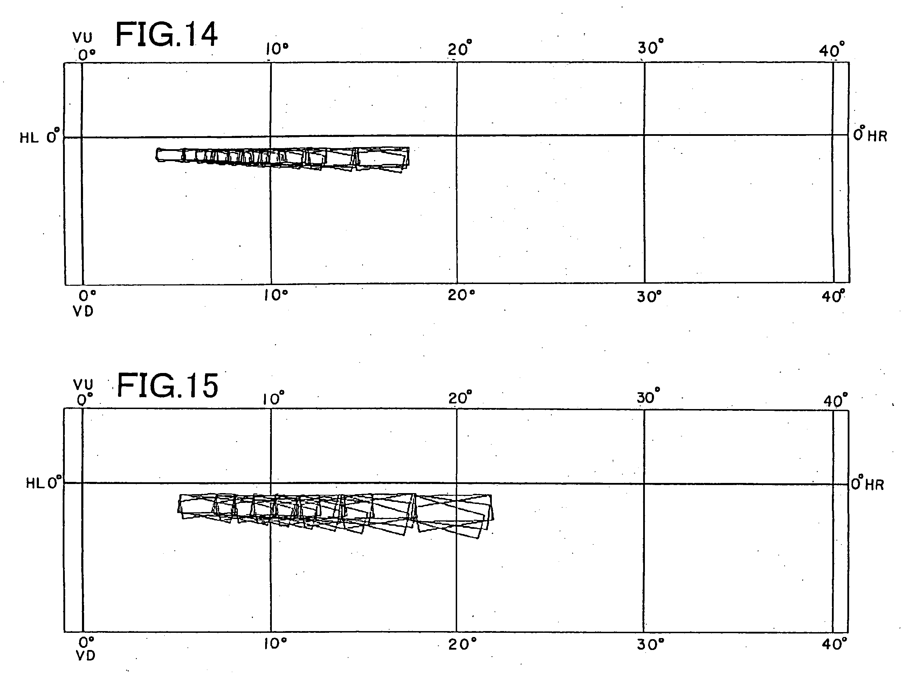

The configuration of the lighting fixture of the present embodiment will be explained with reference to Fig. 7 to Fig. 23. In Fig. 7, reference sign "F" denotes a traveling direction of a vehicle (in the direction indicated by a solid arrow), and indicates the front as seen from a driver side. Reference sign "B" denotes a direction opposite to the traveling direction, and indicates the back as seen from the driver side. Reference sign "U" indicates upward as seen from the driver side. Reference sign "D" indicates downward as seen from the driver side. Reference sign "L" indicates the left side when the driver sees the front. Reference sign "R" indicates the right side when the driver sees the front. In Figs. 8 to 10 and Fig. 13, reference sign "X" indicates a horizontal axis of the lighting fixture. Reference sign "Y" indicates a vertical axis of the lighting fixture. Reference sign "Z" indicates an axis back and forth of a light source of the lighting fixture. In Fig. 11 and Fig. 12, reference sign "HL-HR" indicates a horizontal line. Reference sign "VU-VD" indicates a vertical line. In Fig. 14 to Fig. 23, reference sign "HL-HR" indicates a horizontal line on the screen. Reference sign "VU-VD" indicates a vertical line on the screen. Figs. 14 to 23 are diagrams projected on the screen 10m ahead, as seen from the lighting fixture equipped on the right side of the motor vehicle as an eye point.

In Fig. 7 reference signs 4L and 4R denote the lighting fixture according to this embodiment. The lighting fixtures for vehicles 4L and 4R are respectively equipped on the right and the left at the front of a motor vehicle C. The lighting fixtures for vehicles 4L and 4R are for illuminating the side areas on the road, to supplement the light-distribution pattern obtained by the headlamps for vehicles (for example, in the case of headlamps, a low beam light-distribution pattern and a high beam light-distribution pattern, and in the case of fog lamps, a fog beam light-distribution pattern). In Fig. 7, C-C indicates a car line (an axis in the front and back direction) of the motor vehicle C.

The right side lighting fixture 4R is explained in detail below. This lighting fixture 4R comprises an exclusive light source 5 separate from the headlamps for vehicles, such as a headlamp and a fog lamp, a first reflecting surface 6, and a second reflecting surface 7. The first reflecting surface 6 and the second reflecting surface 7 are provided on the surface of a reflector 9, by aluminum deposition silver painting. A through hole 90 is provided in a portion corresponding to the second reflecting surface 7 of the reflector 9. The light source 5 is arranged in the through hole 90. In other words, the light source 5 is arranged on the second reflecting surface 7 side.

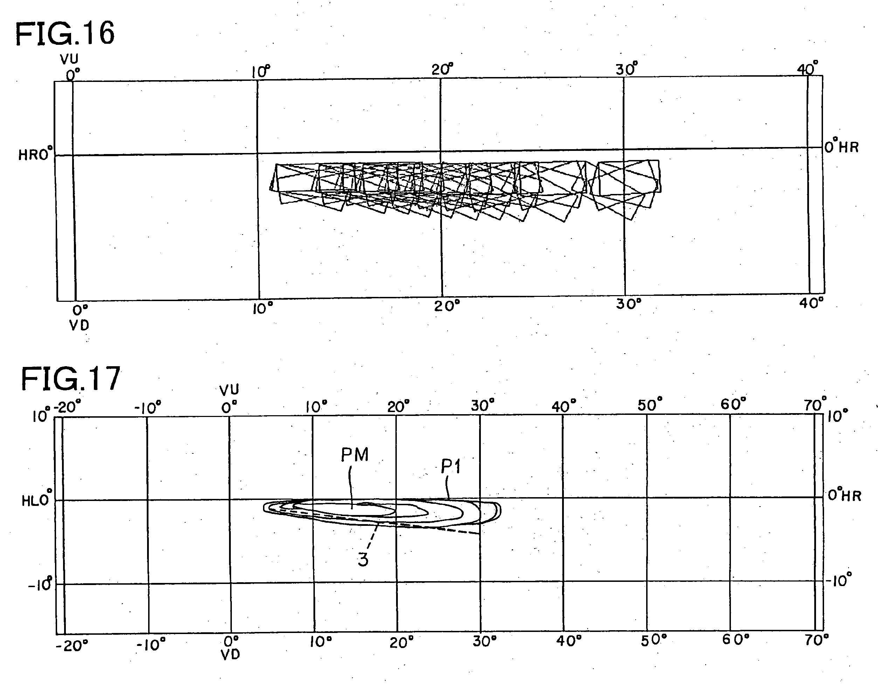

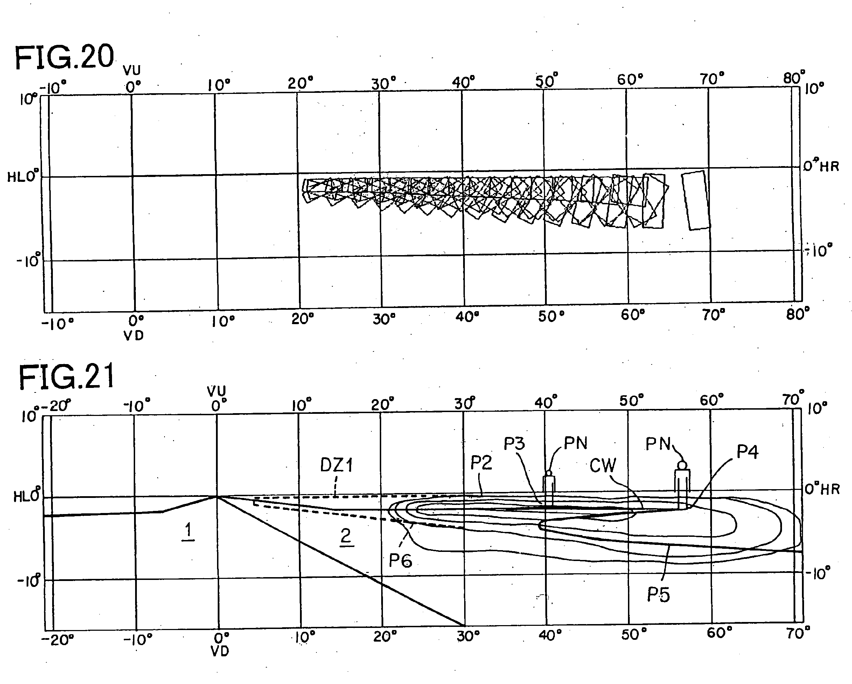

The first reflecting surface 6 is for reflecting the light from the light source 5 to illuminate the side area with a laterally long and slender light-distribution pattern. This long and slender light-distribution pattern is a curve light-distribution pattern P1 (see Fig. 17) where a high luminous intensity zone PM of 10000cd or higher exists, and for illuminating the curve light-distribution zone DZ1 (see Fig. 4) including the curve front area, which the driver looks at when driving the curve. The second reflecting surface 7 is for reflecting the light from the light source 5, to illuminate the side area with a light-distribution pattern laterally long and slender, with the vertical width being slightly wider than that of the curve light-distribution pattern P1. This wide light-distribution pattern is an intersection light-distribution pattern P2 (see Fig. 21), and for illuminating the intersection light-distribution zone DZ2 (see Fig. 5) including the whole area of the pedestrian crossing CW and the peripheral area thereof at the time of turning to the right or left at an intersection. The focal length (pseudo focal length) of the first reflecting surface 6 is about 40mm in this example. On the other hand, the focal length (pseudo focal length) of the second reflecting surface 7 is about 16mm in this example. In other words, the focal length of the first reflecting surface 6 is longer than that of the second reflecting surface 7.

The first reflecting surface 6 comprises, as shown in Fig. 8 and Fig. 11, three quadrangular segments 61, 62, and 63. These three segments 61, 62, and 63 are divided into three to right and left. The first reflecting surface 6, that is, the three segments 61, 62, and 63, is formed of a free-form surface of a convex surface in cross section and a concave surface in longitudinal section. This free-form surface is obtained by combining the reflecting surfaces in a complex manner. Those three segments are referred to as a first segment 61, a second segment 62, and a third segment 63 from outside. The second reflecting surface 7 comprises, as shown in Fig. 8 and Fig. 11, three substantially square segments 71, 72, and 73. These three segments 71, 72, and 73 are divided into two to right and left, and the inside segment is further divided into two vertically.

The segments 71 and 72 divided into two vertically are arranged above and below the light source 5. The outside segment 73 is arranged on the side of the light source 5. The second reflecting surface 7, that is, the three segments 71, 72, and 73, is formed of a free-form surface of a concave surface in cross section and a concave surface in longitudinal section. This free-form surface is obtained by combining the reflecting surfaces in a complex manner. The inside upper segment is referred to as a first segment 71, the inside lower segment is referred to as a second segment 72, and the outside segment is referred to as a third segment 73. The three segments 61, 62, and 63 of the first reflecting surface 6 and the three segments 71, 72, and 73 of the second reflecting surface 7 are formed of a free-form surface of Non-Uniform Rational B-Spline (NURBS) (see the publication of unexamined patent applications in Japan (Japanese Patent Application Laid-Open No. 2001-35215)).

In the figure, the borderlines between the segments 61, 62, 63, 71, 72, and 73 can be seen, but in the case of a series of segments (when the segments are formed continuously), the borderlines between the segments may not be seen. At a focal point (pseudo focal point) F1 of the first reflecting surface 6, and at a focal point (pseudo focal point) F2 of the second reflecting surface 7, a single focal point is not formed in a strict sense, but a difference in the focal length between a plurality of reflecting surfaces is small, and hence substantially the same focal point is shared. Therefore, in this specification and the drawing, it is simply referred to as a focal point. Similarly, in the light axis (pseudo light axis) Z1 of the first reflecting surface 6 and the light axis (pseudo light axis) Z2 of the second reflecting surface 7, a single light axis is not formed in a strict sense, but a difference in the light axis between the reflecting surfaces is small, and hence substantially the same light axis is shared. Therefore, in this specification and the drawing, it is simply referred to as a light axis.

As shown in Figs. 8 to 11 and Fig. 13, the first reflecting surface 6 and the second reflecting surface 7 are connected via a border plane 8 to the right and left. The first reflecting surface 6, the border plane 8, and the second reflecting surface 7 form a laterally long rectangle having a height H of about 40mm, in this example. The first reflecting surface 6 is arranged inward of the motor vehicle C than the border plane 8. On the other hand, the second reflecting surface 7 is arranged outward of the motor vehicle C than the border plane 8.

Further, the border plane 8 is slantingly arranged at an angle of θ3 (about 39.5° in this example) outward of the motor vehicle C with respect to the axis Z of the light source 5. The first reflecting surface 6 has, as shown in Fig. 8 and Fig. 11, a longitudinal dimension H arid a lateral dimension L1 of a laterally long quadrangle, suitable for forming the curve light-distribution pattern by a group of filament images reflected into the respective segments 61, 62, and 63 of the first reflecting surface 6 from the light source 5. In this example, in Fig. 8 and Fig. 11, the longitudinal dimension H is about 40mm and the lateral dimension L1 is about 80mm, as seen from the front.

The second reflecting surface 7 has, as shown in Fig. 8 and Fig. 11, a longitudinal dimension H and a lateral dimension L2 of a quadrangle, suitable for forming the intersection light-distribution pattern by a group of filament images reflected into the respective segments 71, 72, and 73 of the second reflecting surface 7 from the light source 5. In this example, in Fig. 8 and Fig. 11, the longitudinal dimension H is about 40mm and the lateral dimension L2 is about 60mm, as seen from the front. The light axis Z1 of the first reflecting surface 6 is deflected outward of the motor vehicle C by an angle θ1 (about 10° in this example) with respect to the axis Z of the light source 5.

The light axis Z2 of the second reflecting surface 7 is deflected outward of the motor vehicle C by an angle θ2 (about 40° in this example) with respect to the axis Z of the light source 5. The deflection angle θ2 of the light axis Z2 of the second reflecting surface 7 is larger than the deflection angle θ1 of the light axis Z1 of the first reflecting surface 6. The outside end of the second reflecting surface 7, that is, the outside edge of the third segment 73 is located at the back B of a filament 51, being a light emission section of the light source 5.

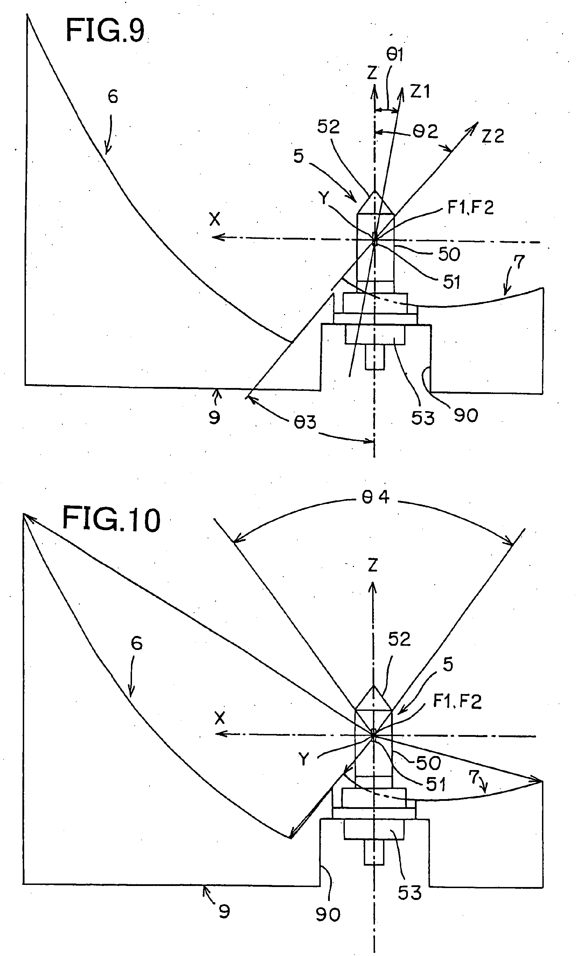

The light source 5 is a light source of a C-8 type. This light source 5 has, as shown in Fig. 9, Fig. 10, and Fig. 13, a long and slender, and cylindrical filament 51 enclosed in a bulb 50. In this light source 5, a coniform shading top coat 52 is provided at the top of the bulb 50. A cap 53 is provided at the bottom of the bulb 50. The light source 5 is detachably fitted to the reflector 9, with the cap 53 of the light source 5 abutted against the edge of the through hole 90 of the reflector 9. At this time, the light source 5 is arranged such that the axis Z of the light source 5 (that is, the axis Z of the filament 51) becomes parallel with the car line C-C.

Further, the center of the filament 51 of the light source 5 is located in the vicinity of the focal point F1 of the first reflecting surface 6 and the focal point F2 of the second reflecting surface 7. The focal point F1 of the first reflecting surface 6 and the focal point F2 of the second reflecting surface 7 are located substantially at the same position. The length of the axis of the filament 51 of the light source 5 is 4.1mm, the radius of the filament 51 is 1.3mm, and the luminous flux of the filament 51 is 1500 Im.

Fig. 12 shows basic filament images 61P, 63P, 73RP, and 73LP reflected by the main segments 61, 63, 73R, and 73L and projected onto the screen. The first segment 61 of the first reflecting surface 6 is arranged at the furthest position from the light source 5. The focal length of the first reflecting surface 6 is longer than that of the second reflecting surface 7. Therefore, the filament image from the light source 5 enter in the first segment 61 is the smallest. The smallest filament image is open-dispersed by the first segment 61 having a convex surface in cross section, and reflected as a basic filament image 61P long and slender sideways.

The third segment 63 of the first reflecting surface 6 is arranged at a position closest to the light source 5 in the first reflecting surface 6, but at a position farther than the second reflecting surface 7 (the outside portion 73R of the third segment 73). The focal length of the first reflecting surface 6 is longer than that of the second reflecting surface 7. Therefore, the filament image from the light source 5 enter in the third segment 63 is larger than the filament image enter in the first segment 61, but smaller than the filament image enter in the second reflecting surface 7. This filament image is open-dispersed by the third segment 63 having a convex surface in cross section, and reflected as a filament image 63P long and slender sideways, with the vertical width gradually increasing from inside toward outside.

The outside portion 73R of the third segment 73 of the second reflecting surface 7 is arranged at the furthest position from the light source 5 in the second reflecting surface 7, but at a position closer than the first reflecting surface 6 (the third segment 63). The focal length of the second reflecting surface 7 is shorter than that of the first reflecting surface 6. Therefore, the filament image from the light source 5 enter in the outside portion 73R of the third segment 73 is larger than the filament image enter in the first reflecting surface 6, but smaller than the filament image enter in the inside portion 73L of the third segment 73. This filament image is cross-dispersed by the outside portion 73R of the third segment 73 having a concave surface in cross section and reflected as a filament image 73RP wide laterally and vertically, with the vertical width gradually increasing from inside toward outside.

The inside portion 73L of the third segment 73 of the second reflecting surface 7 is arranged at a position closest to the light source 5. The focal length of the second reflecting surface 7 is shorter than that of the first reflecting surface 6. Therefore, the filament image from the light source 5 enter in the inside portion 73L of the third segment 73 becomes the largest. The largest filament image is cross-dispersed by the inside portion 73L of the third segment 73 having a concave surface in cross section and reflected as a filament image 73LP wide laterally and vertically, with the vertical width gradually increasing from inside toward outside.

When the basic filament images 61 P, 63P, 73RP, and 73LP are connected, these form a trapezoid long and slender sideways, with the vertical width gradually increasing from inside toward outside. This substantially agrees with the side area light-distribution zone DZ (see Fig. 6) in a laterally long trapezoidal shape. Further, the upper ends of the basic filament images 61P, 63P, 73RP, and 73LP substantially agree with the low beam cut line CL (see Fig. 1 and Fig. 3).

Figs. 14 to 16 and Figs. 18 to 20 show light-distribution patterns of the respective segments obtained by a computer simulation (light-distribution pattern in which a group of filament image of a small quadrangle are assembled) in a simplified manner.

Fig. 14 shows a light-distribution pattern formed by the first segment 61 of the first reflecting surface 6. The group of filament images long and slender sideways (see the basic filament image 61P in Fig. 12) in this light-distribution pattern is dispersed densely at the center and rarefactionally at the right and left ends, in the lateral direction (in the right and left direction) by the convex surface in cross section of the first segment 61, and densely in the longitudinal direction by the concave surface in longitudinal section of the first segment 61. Since the first segment 61 of the first reflecting surface 6 is arranged at the furthest position from the light source 5, the light enter in this first segment 61 is the weakest light.

This first segment 61 is for forming a light-distribution pattern shown in Fig. 14, by assembling the weakest light densely. The light-distribution pattern shown in Fig. 14 is for forming the high luminous intensity zone PM, and the vicinity of the peripheral area, particularly, the vicinity of the left side peripheral area, in the curve light-distribution pattern P1. Fig. 15 shows a light-distribution pattern formed by the second segment 62 of the first reflecting surface 6.

The group of filament images long and slender sideways (see the filament image having a middle size between the basic filament images 61P and 63P in Fig. 12) in this light-distribution pattern is dispersed densely at the center and rarefactionally at the right and left ends, in the lateral direction (in the right and left direction) by the convex surface in cross section of the second segment 62, and densely in the longitudinal direction by the concave surface in longitudinal section of the second segment 62. Since the second segment 62 is arranged closer to the light source 5 than the first segment 61, the angle of inclination of the oblique filament image becomes slightly larger than that of the first segment 61.

Further, since the second segment 62 is located outward of the motor vehicle C than the first segment 61, the group of the filament images are deflected outward. For example, the left end (5R) of the filament image group of the second segment 62 is deflected by about 1° to the right with respect to the left end (4R) of the filament image group of the first segment 61.

On the other hand, the right end (22R) of the filament image group of the second segment 62 is deflected by about 5° to the right with respect to the right end (17R) of the filament image group of the first segment 61. Since the second segment 62 is arranged at a position the second furthest from the light source 5, the light enter in the second segment 62 is the second weakest light. This second segment 62 is for forming a light-distribution pattern shown in Fig. 15, by assembling the second weakest light densely. The light-distribution pattern shown in Fig. 15 is for forming the high luminous intensity zone PM and the vicinity of the peripheral area in the curve light-distribution pattern P1.

Fig. 16 shows a light-distribution pattern formed by the third segment 63 of the first reflecting surface 6. The group of filament images long and slender sideways (see the basic filament image 63P in Fig. 12) in this light-distribution pattern is dispersed densely at the center and rarefactionally at the right and left ends, in the lateral direction (in the right and left direction) by the convex surface in cross section of the third segment 63, and densely in the longitudinal direction by the concave surface in longitudinal section of the third segment 63.

Since the third segment 63 is arranged closer to the light source 5 than the first segment 61 and the second segment 62, the angle of inclination of the oblique filament image becomes larger than that of the first and second segments. Further, since the third segment 63 is located outward of the motor vehicle C than the first segment 61 and the second segment 62, the group of the filament images is deflected outward further. For example, the left end (11 R) of the filament image group of the third segment 63 is deflected by about 7° to the right with respect to the left end (4R) of the filament image group of the first segment 61, and by about 6° to the right with respect to the left end (5R) of the filament image group of the second segment 62.

On the other hand, the right end (32R) of the filament image group of the third segment 63 is deflected by about 15° to the right with respect to the right end (17R) of the filament image group of the first segment 61, and by about 10° to the right with respect to the right end (22R) of the filament image group of the second segment 62. Since the third segment 63 is arranged at a position the third furthest from the light source 5, the light enter in the third segment 63 is the third weakest light. This third segment 63 is for forming a light-distribution pattern shown in Fig. 16, by assembling the third weakest light densely. The light-distribution pattern shown in Fig. 16 is for forming the high luminous intensity zone PM, the peripheral area, and the right end portion thereof in the curve light-distribution pattern P1.

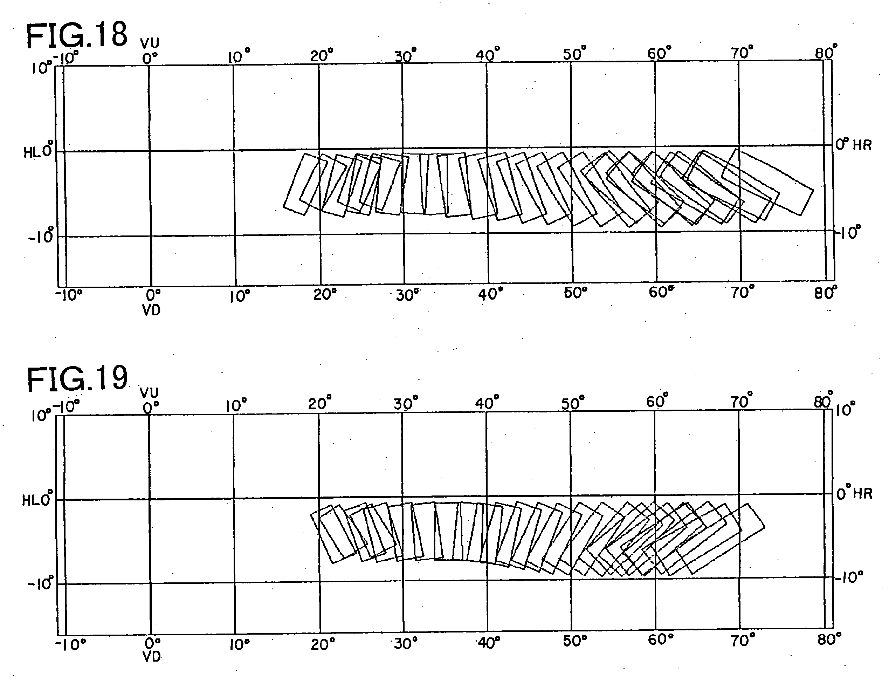

Fig. 18 shows a light-distribution pattern formed by the first segment 71 of the second reflecting surface 7. The group of filament images in this light-distribution pattern (filament image larger than the basic filament image 73LP in Fig. 12) is dispersed substantially uniformly laterally (in the right and left direction) by the concave surface in cross section of the first segment 71. The first segment 71 is arranged above the light source 5, and the vertical width of the first segment 71 is small. Therefore, the group of filament images formed by this first segment 71 is such that the vertically long filament images are arranged in one line laterally, and the vertically long filament images located at the right and left ends are inclined. Since the first segment 71 is arranged at the closest position to the light source 5, the light enter in this first segment 71 is the strongest light.

This first segment 71 is for forming a light-distribution pattern shown in Fig. 18, by spreading the strongest beams. The light-distribution pattern shown in Fig. 18 is for forming substantially the whole area of the intersection light-distribution pattern P2. Fig. 19 shows a light-distribution pattern formed by the second segment 72 of the second reflecting surface 7. The group of filament images in this light-distribution pattern (filament image larger than the basic filament image 73LP in Fig. 12) is dispersed substantially uniformly laterally (in the right and left direction) by the concave surface in cross section of the second segment 72, in the same manner as the filament image group formed by the first segment 71.

The second segment 72 is arranged below the light source 5, and the vertical width of the second segment 72 is as small as that of the first segment 71. Therefore, the group of filament images formed by this second segment 72 is such that the vertically long filament images are arranged in one line laterally, and the vertically long filament images located at the right and left ends are inclined, as in the group of filament images formed by the first segment 71. Since the second segment 72 is arranged at the closest position to the light source 5, as in the first segment 71, the light enter in this second segment 72 is the strongest light. This second segment 72 is for forming a light-distribution pattern shown in Fig. 19, by spreading the strongest beams. The light-distribution pattern shown in Fig. 19 is for forming substantially the whole area of the intersection light-distribution pattern P2.

Fig. 20 shows a light-distribution pattern formed by the third segment 73 of the second reflecting surface 7. The group of filament images in this light-distribution pattern (see basic filament images 73LP and 73RP in Fig. 12) is dispersed laterally (in the right and left direction) by the concave surface in cross section of the third segment 73, and collected in the longitudinal direction by the concave surface in longitudinal section of the third segment 73. The third segment 73 is arranged on the side of the light source 5, and the vertical width of the third segment 73 has the same size as that of the first reflecting surface 6. Therefore, the group of filament images formed by this third segment 73 is such that the laterally long filament image, the oblique filament image, and the vertically long filament image are arranged laterally. The filament images gradually increases from inside toward outside.

Since the third segment 73 is arranged on the side of the light source 5, the light enter in the outside portion 73R of this third segment 73 is slightly weaker than the light enter in the inside portion 73L. Therefore, the outside portion 73R of this third segment 73 is for forming a light-distribution pattern shown in Fig. 20, by collecting the slightly weak beams, and the inside portion 73L is for forming a light-distribution pattern shown in Fig. 20, by spreading the strong beams. The light-distribution pattern shown in Fig. 20 is for forming the whole areas P3 and P4 of the pedestrian crossing, and the peripheral area P5 in the intersection light-distribution pattern P2. The upper end of the group of the filament images formed by the respective segments 61, 62, 63, 71, 72, and 73 substantially agrees with the low beam cut line CL.

Fig. 17 is an image diagram of the curve light-distribution pattern P1 projected on the screen, obtained by the lighting fixture of the present embodiment. The curve light-distribution pattern P1 shown in Fig. 17 is obtained by respectively combining the light-distribution patterns formed by the respective segments 61, 62, and 63 in the first reflecting surface 6 shown in Fig. 14 to Fig. 16. The curve light-distribution pattern P1 shown in Fig. 17 is for illuminating the curve light-distribution zone DZ1 shown in Fig. 4. At the center of the curve light-distribution pattern P1, a high luminous intensity zone PM of 10000cd or higher exists.

On the other hand, substantially the center of the curve light-distribution pattern P1 exists inward than a line "30° to the right" from the vertical line VU-VD on the screen with respect to the light axis of the headlamp for vehicles (the vertical line VU-VD on the screen). As a result, the high luminous intensity zone PM of 10000cd or higher, being the central part of the curve light-distribution pattern P1 exists, as shown in Fig. 17, from "7° to the right" to "20° to the right" from the vertical line VU-VD on the screen, and above the line "2.86° below" from the horizontal line HL-HR on the screen.

In other words, the high luminous intensity zone PM of 10000cd or higher exists in the "curve front area at which the driver looks", being the upper part than the line 3 connecting the three points shown in Fig. 3. The upper end of the curve light-distribution pattern P1 is located substantially above the low beam cut line CL, and over the range of from "4° to the right" to "32° to the right" from the vertical line VU-VD on the screen. In the curve light-distribution pattern P1, the equi-intensity curve of light indicates 10000cd, and other curves respectively indicate 5000cd, 2000cd, 1000cd, 500cd, and 300cd toward the outside.

Fig. 21 is an image diagram of the intersection light-distribution pattern P2 projected on the screen, obtained by the lighting fixture in this embodiment. The light-distribution pattern P2 shown in Fig. 21 is obtained by respectively combining the light-distribution patterns formed by the respective segments 71, 72, and 73 in the second reflecting surface 7 shown in Fig. 18 to Fig. 20. The intersection light-distribution pattern P2 shown in Fig. 21 is for illuminating the intersection light-distribution zone DZ2 shown in Fig. 5.

The substantial center of the intersection light-distribution pattern P2 exists outside of the line "30° to the right" from the vertical line VU-VD on the screen with respect to the light axis of the headlamp for vehicles (the vertical line VU-VD on the screen). As a result, the portion higher than 2000cd of the central portion in the intersection light-distribution pattern P2 exists between "24° to the right" and "51° to the right" from the vertical line VU-VD on the screen and between "1.5° below" and "3.5° below" of the horizontal line HL-HR on the screen. As a result, the portion of 2000cd or higher of the central portion in the intersection light-distribution pattern P2 can cover the other side P3 of the pedestrian crossing. Further, the portion of 1000cd or higher of the central portion in the intersection light-distribution pattern P2 exists between "23° to the right" and "63° to the right" from the vertical line VU-VD on the screen and between "1° below" and "5° below" of the horizontal line HL-HR on the screen.

As a result, the portion of 1000cd or higher of the central portion in the intersection light-distribution pattern P2 can cover this side P4 of the pedestrian crossing. Hence, the central portion higher than 1000cd in the intersection light-distribution pattern P2 can substantially "cover the three points, that is, the point of 2.5D-30R, the point of 2.5D-45R and the point of 2.5D-60R", that is, the whole area of the pedestrian crossing CW. Further, the peripheral portion higher than 500cd in the intersection light-distribution pattern P2 exists between "22° to the right" and "68° to the right" from the vertical line VU-VD on the screen and between "0.5° below" and "8° below" of the horizontal line HL-HR on the screen. As a result, the peripheral portion higher than 500cd in the intersection light-distribution pattern P2 can cover the peripheral area P5 of the pedestrian crossing.

Further, the luminous intensity in the left portion inside of the intersection light-distribution pattern P2 is densely distributed. In other words, a supplementary light distribution section P6 for continuously and smoothly connecting with the curve light-distribution pattern P1 without a difference in luminous intensity is distributed at the inside edge of the intersection light-distribution pattern P2. The upper end of the intersection light-distribution pattern P2 is located substantially on an extension line of the low beam cut line CL, and in the range of from "22° to the right" and "63° to the right" from the vertical line VU-VD on the screen. In the intersection light-distribution pattern P2, the equi-intensity curve of light at the center indicates 2000cd, and other curves respectively indicate 1000cd, 500cd, and 300cd toward the outside.

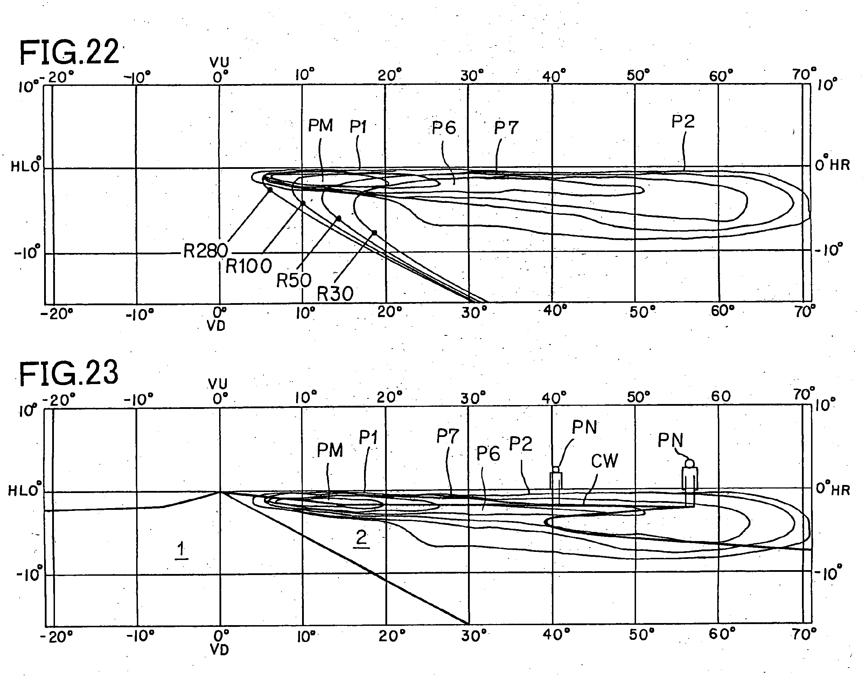

Fig. 22 and Fig. 23 are image diagrams of the side area light-distribution pattern P7 projected on the screen, obtained by the lighting fixture in this embodiment. The light-distribution patterns shown in Fig. 22 and Fig. 23 are obtained by respectively combining the curve light-distribution pattern P1 shown in Fig. 17 and the intersection light-distribution pattern P2 shown in Fig. 21. The side area light-distribution pattern P7 shown in Fig. 22 and Fig. 23 is for illuminating the side area light-distribution zone DZ shown in Fig. 6. The side area light-distribution pattern P7 shown in Fig. 22 indicates the state at the time of driving a curve, and the side area light-distribution pattern P7 shown in Fig. 23 indicates the state at the time of traveling an intersection.

In the side area light-distribution pattern P7, the portion of 2000cd or higher outside of the curve light-distribution pattern P1 and the portion of 2000cd or higher inside of the intersection light-distribution pattern P2 are continuously and smoothly connected without a difference in luminous intensity, via the supplementary light distribution section (see P6 in Fig. 21). The upper end of the side area light-distribution pattern P7 is located substantially on the low beam cut line CL and an extension line thereof, and in the range of from "4° to the right" to "63° to the right" from the vertical line VU-VD on the screen. In the side area light-distribution pattern P7, the equi-intensity curve of light at the center indicates 10000cd, and other curves respectively indicate 5000cd, 2000cd, 1000cd, 500cd, and 300cd toward the outside.

The lighting fixture of the present embodiment produces effects that are explained below. At first, the light source 5 is lighted. Then, the light from the light source 5 are respectively reflected by the respective segments 61, 62, and 63 of the first reflecting surface 6, as a light-distribution pattern of the group of filament images shown in Fig. 14 to Fig. 16. The reflected light-distribution patterns of the respective segments 61, 62, and 63 are combined as the curve light-distribution pattern P1 shown in Fig. 17, to positively illuminate the curve light-distribution zone DZ1 shown in Fig. 4. The curve light-distribution zone DZ1 covers, as shown in Fig. 4, the curve front area on the upper side of the line 3 connecting the three points in the ECE Standard (see Fig. 2 and Fig. 3). Therefore, the curve light-distribution pattern P1 can positively illuminate the curve light-distribution zone DZ1 including the curve front area at which the driver looks at the time of driving a curve.

Further, the light from the light source 5 are respectively reflected as a light-distribution pattern of the group of filament images shown in Fig. 18 to Fig. 21, by the respective segments 71, 72, and 73 of the second reflecting surface 7. The reflected light-distribution patterns of the respective segments 71, 72, and 73 are combined as the intersection light-distribution pattern P2 shown in Fig. 21, to positively illuminate the intersection light-distribution zone DZ2 shown in Fig. 5. The intersection light-distribution zone DZ2 covers, as shown in Fig. 5, the whole area of the pedestrian crossing CW and the peripheral area thereof. Therefore, the intersection light-distribution pattern P2 can positively illuminate the intersection light-distribution zone DZ2 including the whole area of the pedestrian crossing CW and the peripheral area thereof at the time of turning to the right or left at an intersection.

Then, the curve light-distribution pattern P1 and the intersection light-distribution pattern P2 are combined, to form the side area light-distribution pattern P7 shown in Fig. 22 and Fig. 23, to thereby positively illuminate the side area light-distribution zone DZ. The side area light-distribution zone DZ is, as shown in Fig. 6, obtained by combining the curve light-distribution zone DZ1 (see Fig. 4) and the intersection light-distribution zone DZ2 (see Fig. 5). Therefore, as shown in Fig. 22, the side area light-distribution pattern P7 can positively illuminate the curve front area at which the driver looks at the time of driving a curve. Further, as shown in Fig. 23, the side area light-distribution pattern P7 can positively illuminate the whole area of the pedestrian crossing CW and the peripheral area thereof at the time of turning to the right or left at an intersection.

As described above, the lighting fixture of the present embodiment improves the visibility at the time of driving a curve and at the time of turning to the right or left at an intersection, and ensures the safety.

As shown in Fig. 17 and Fig. 22, the lighting fixture of the present embodiment can shift the high luminous intensity zone PM in the curve light-distribution pattern P1 to the curve front area. As a result, in the lighting fixture of the present embodiment, even if a closer area than the curve front area is illuminated at the same time, the sight of the driver are directed to the curve front area to be aimed, due to the high luminous intensity zone PM in the curve front area. Hence, it is suitable for the light distribution at the time of driving a curve.

Further, as shown in Fig. 17, in the lighting fixture of the present embodiment, since the substantial center of the curve light-distribution pattern P1 exists inside of 30R on the screen, as shown in Fig. 22, the whole curve front area can be illuminated, over the whole range of the radius of curve R280 to R30 of the road. In the lighting fixture of the present embodiment, as shown in Fig. 17, since the high luminous intensity zone PM exists above 2.86D on the screen, as shown in Fig. 22, the high luminous intensity zone PM in the curve light-distribution pattern P1 can be shifted to the curve front area. As a result, the lighting fixture of the present embodiment can positively illuminate the curve light-distribution zone DZ1 including the curve front area with the desired curve light-distribution pattern P1.

In the lighting fixture of the present embodiment, as shown in Fig. 17 and Fig. 22, since the upper end of the curve light-distribution pattern P1 is located along the low beam cut line CL, glare to the car running in the opposite lane can be prevented at the time of driving a curve. Since the upper end of the curve light-distribution pattern P1 is located along the low beam cut line CL, the lighting fixture of the present embodiment can clear the upper glare restriction line GL, and hence can satisfy the AFS Standard. Further, in the lighting fixture of the present embodiment, as shown in Fig. 17 and Fig. 22, the high luminous intensity zone PM in the curve light-distribution pattern P1 is 10000cd or higher, and hence illuminance of 5 lx or higher can be obtained in the curve front area at least 40m ahead. This 5 lx is generally a standard for visibility. As a result, the lighting fixture of the present embodiment can ensure the visibility of at least 40m in the safety regulations for low beams in the curve light-distribution pattern P1.

As shown in Fig. 21 and Fig. 23, since the substantial center of the intersection light-distribution pattern P2 exists outside of 30R on the screen, the lighting fixture of the present embodiment can illuminate the whole area of the pedestrian crossing CW. As shown in Fig. 21 and Fig. 23, since the lowermost end of the intersection light-distribution pattern P2 exists below 2.5D on the screen, the lighting fixture of the present embodiment can illuminate the peripheral area of the pedestrian crossing CW. As described above, as shown in Fig. 21 and Fig. 23, the lighting fixture of the present embodiment can positively illuminate the intersection light-distribution zone DZ2 including the whole area of the pedestrian crossing CW and the peripheral area thereof, with the desired intersection light-distribution pattern P2. As shown in Fig. 21 and Fig. 23, since the substantial center of the intersection light-distribution pattern P2 exists outside of 30R on the screen, the lighting fixture can illuminate the whole area of the pedestrian crossing CW and the peripheral area thereof with the intersection light-distribution pattern P2, even at the time of turning a sharp intersection where the intersection angle specified in the act of road structure is 60° or 75°.

Further, as shown in Fig. 21 and Fig. 23, since the upper end of the intersection light-distribution pattern P2 is located along the low beam cut line CL, the lighting fixture can prevent glare to the passenger of a vehicle and pedestrians stopping in the right turn direction (or left turn direction), at the time of turning to the right or left at an intersection. As shown in Fig. 21 and Fig. 23, the lighting fixture has a luminous intensity distribution in the intersection light-distribution pattern P2, such that the luminous intensity in the other side P3 of the pedestrian crossing is at least 2000cd, the luminous intensity in this side P4 of the pedestrian crossing is at least 1000cd, and the luminous intensity in the peripheral area P5 of the pedestrian crossing is at least 500cd.

On the other hand, at the time of entering the intersection, the distance in a straight line from the own vehicle to the pedestrian crossing CW at the time of turning to the right is from about 15m (this side P4 of the pedestrian crossing) to 20m (the other side P3 of the pedestrian crossing). Therefore, in the whole pedestrian crossing CW and the peripheral area thereof of the distance in a straight line, illuminance of at least 5 lx can be obtained. As a result, the lighting fixture of the present embodiment can ensure the visibility of 5 lx or higher in the safety regulations.

As shown in Fig. 21 to Fig. 23, the lighting fixture of the present embodiment can form a side area light distribution P7, in which a portion of at least 2000cd outside of the curve light-distribution pattern P1 and a portion of at least 2000cd inside of the intersection light-distribution pattern P2 are continuously and smoothly connected without a difference in luminous intensity, via the supplementary light distribution section P6. As a result, the lighting fixture can obtain the preferable side area light-distribution pattern P7 without having a sense of incompatibility, though the two light-distribution patterns having different light distribution characteristics (curve light-distribution pattern P1 and intersection light-distribution pattern P2) are connected.

In the lighting fixture of the present embodiment, the first reflecting surface 6 and the second reflecting surface 7 are connected right and left via the border plane 8. Therefore, although the light distribution characteristic of the curve light-distribution pattern P1 on the first reflecting surface 6 and that of the intersection light-distribution pattern P2 on the second reflecting surface 7 are different, the first reflecting surface 6 and the second reflecting surface 7 having different light distribution characteristics can be arranged within the range of a laterally long rectangle, by the border plane 8. In the lighting fixture, since the first reflecting surface 6, the border plane 8, and the second reflecting surface 7 form a laterally long rectangle, the longitudinal dimension can be decreased, and hence a lighting fixture compact in the longitudinal direction can be provided.

The lighting fixture of the present embodiment is preferable in view of the light distribution, because the first reflecting surface 6 is arranged inward of the vehicle than the border plane 8, and the curve light-distribution zone DZ1 is located inward than the intersection light-distribution zone DZ2 (that is, inside of the side area light-distribution zone DZ). On the other hand, the lighting fixture of the present embodiment is preferable in view of the light distribution, because the second reflecting surface 7 is arranged outward of the vehicle than the border plane 8, and the intersection light-distribution zone DZ2 is located outward than the curve light-distribution zone DZ1 (that is, outside of the side area light-distribution zone DZ). As a result, the lighting fixture can illuminate the curve light-distribution zone DZ1 positively and efficiently by the first reflecting surface 6, and the intersection light-distribution zone DZ2 positively and efficiently by the second reflecting surface 7.

The lighting fixture of the present embodiment can use the group of long and slender filament images suitable for forming the long and slender curve light-distribution pattern P1, of the group of filament images projected from the light source 5 onto the reflecting surface, by the laterally long quadrangular first reflecting surface 6. As a result, the lighting fixture can efficiently form the laterally long curve light-distribution pattern P1 by the laterally long quadrangular first reflecting surface 6, and illuminate the long and slender curve light-distribution zone DZ1 efficiently and positively with the long and slender curve light-distribution pattern P1. In addition, when the filament image is laterally long, it is suitable for allowing the laterally long filament image to enter onto the laterally long first reflecting surface 6.

On the other hand, the lighting fixture of the present embodiment can use the group of filament images, which are wide sideways and slightly wider downward, suitable for forming the intersection light-distribution pattern P2, which is wide sideways and slightly wider downward, of the group of filament images projected from the light source 5 onto the reflecting surface, by the quadrangular second reflecting surface 7. As a result, the lighting fixture of the present embodiment can efficiently form the intersection light-distribution pattern P2, which is wide sideways and slightly wider downward, by the quadrangular second reflecting surface 7, and illuminate the curve light-distribution zone DZ2, which is wide sideways and slightly wider downward, efficiently and positively with the curve light-distribution pattern P2, which is wide sideways and slightly wider downward.

In the lighting fixture of the present embodiment, the light axis Z1 of the first reflecting surface 6 and the light axis Z2 of the second reflecting surface 7 are respectively deflected outward of the motor vehicle with respect to the axis Z of the light source 5, and the deflection angle θ2 of the second reflecting surface 7 is larger than the deflection angle θ1 of the first reflecting surface 6. As a result, in the lighting fixture of the present embodiment, the curve light-distribution pattern and the intersection light-distribution pattern can be distributed efficiently outside of the light-distribution pattern obtained by the headlamp for vehicles (for example, in the case of the headlamp, low beam light-distribution pattern and high beam light-distribution pattern, and in the case of the fog lamp, fog beam light-distribution pattern).

Particularly, in the lighting fixture of the present embodiment, since the deflection angle θ2 of the second reflecting surface 7 is larger than the deflection angle θ1 of the first reflecting surface 6, the intersection light-distribution zone DZ2 outside of the curve light-distribution zone DZ1 can be illuminated efficiently and positively with the intersection light-distribution pattern P2 from the second reflecting surface 7. Further, the lighting fixture of the present embodiment can illuminate the whole area of the pedestrian crossing CW and the peripheral area thereof with the intersection light-distribution pattern P2, even at the time of turning a sharp intersection where the intersection angle specified in the act of road structure is 60° or 75°.

In the lighting fixture of the present embodiment, the outside edge of the second reflecting surface 7 is located at the rear of the filament 51 of the light source 5. As a result, the lighting fixture of the present embodiment can irradiate the direct light from the light source 5 to the outside, without being interrupted by the outside edge of the second reflecting surface 7. As a result, in the lighting fixture of the present embodiment, the direct light can positively illuminate the intersection light-distribution zone DZ2 and the periphery thereof, with the intersection light-distribution pattern P2.

In the lighting fixture of the present embodiment, the light source 5 is of a C-8 type having a shading top coat 52, and the axis Z of the light source 5 is parallel with the car line C-C. As a result, in the lighting fixture of the present embodiment, as shown in Fig. 10, the direct light within a coniform having the radius of 30° (θ4/2), designating the axis Z of the light source 5 as the central axis, and designating the center of the filament 51 as an apex, of the direct light from the light source 5, can be shaded without using a shade. As a result, the lighting fixture of the present embodiment can prevent dazzle to the car running in the opposite lane in the curve light distribution, without an additional cost. Further, in the lighting fixture of the present embodiment, since the light source 5 is arranged parallel with the car line C-C, it is generally preferred in view of the appearance.

In the lighting fixture of the present embodiment, since the first reflecting surface 6 is formed of a free-form surface of a convex surface in cross section and a concave surface in longitudinal section, the group of filament images enter in the first reflecting surface 6 is open-dispersed by the convex surface in cross section, to form a group of laterally long and slender filament images, and the group of laterally long and slender filament images can be collected longitudinally by the concave surface in longitudinal section. As a result, the lighting fixture of the present embodiment can form the aimed long and slender light-distribution pattern efficiently, by the first reflecting surface 6. On the other hand, in the lighting fixture of the present embodiment, since the second reflecting surface 7 is formed of a free-form surface of a concave surface in cross section and a concave surface in longitudinal section, the group of filament images enter in the second reflecting surface 7 is cross-dispersed by the concave surface in cross section, to form a group of laterally and longitudinally wide filament images, and the group of laterally and longitudinally wide filament images can be collected longitudinally by the concave surface in longitudinal section. As a result, the lighting fixture of the present embodiment can form the aimed wide light-distribution pattern efficiently by the second reflecting surface 7.

In the lighting fixture of the present embodiment, since the free-form surface of the first reflecting surface 6 and the free-form surface of the second reflecting surface 7 are made to be the free-form surface of NURBS, the first reflecting surface 6 and the second reflecting surface 7 can be produced under control highly accurately, at a high speed and with high freedom.

In the lighting fixture of the present embodiment, since the filament image from the light source 5 enter in the first reflecting surface 6 having a long focal length is long and slender, the aimed long and slender light-distribution pattern can be formed efficiently. Further, the lighting fixture can positively illuminate the curve light-distribution zone DZ1 including the curve front area, assuming the aimed long and slender light-distribution pattern to be a curve light-distribution pattern. Particularly, since the lighting fixture can positively illuminate the curve front area, assuming the aimed long and slender light-distribution pattern to be a curve light-distribution pattern, even if a closer area than the curve front area is also illuminated at the same time, it is suitable for the light distribution at the time of driving a curve, because the driver looks at the aimed curve front area. On the other hand, in the lighting fixture, since the filament image from the light source enter in the second reflecting surface 7 having a short focal length is wide, the aimed wide light-distribution pattern can be efficiently formed. Further, the lighting fixture can positively illuminate the intersection light-distribution zone DZ2 including the whole area of the pedestrian crossing and the peripheral area thereof, assuming the aimed wide light-distribution pattern to be the intersection light-distribution pattern.

In the embodiment, the long and slender light-distribution pattern is the curve light-distribution pattern P1 for illuminating then curve light-distribution zone DZ1, and the wide light-distribution pattern is the intersection light-distribution pattern P2 for illuminating the intersection light-distribution zone DZ2. As other embodiment of the present invention, however, the long and slender light-distribution pattern may be a pattern that can positively illuminate the aimed side area with the aimed light-distribution pattern, and the wide light-distribution pattern may be a pattern that can positively illuminate the aimed side area with the aimed light-distribution pattern.

In the embodiment, a light source 5 having a specification such that the axial length of the filament 51 is 4.1mm, the radius thereof is 1.3mm, and the luminous flux thereof is 15001m is used. As other embodiment of the present invention, however, a light source having a specification other than this may be used.

In the embodiment, the light axis Z1 of the first reflecting surface 6 is deflected outward of the motor vehicle C by an angle θ1 with respect to the axis Z of the light source 5, and the size of the first reflecting surface 6 is about 40mm long x about 80mm wide, as seen from the front in Fig. 8 and Fig. 11. Further, the focal length of the first reflecting surface 6 is about 40mm, and the first reflecting surface 6 comprises three segments 61, 62, and 63, being a free-form surface based on the convex surface in cross section and a concave surface in longitudinal section. The combination of the first reflecting surface 6 having such a configuration and the light source 5 having the above specification is one of the most effective examples for obtaining the desired curve light-distribution pattern P1 for positively illuminating the desired curve light-distribution zone DZ1. Although this combination is one of the most effective examples, it is by no means limited to this combination. In the first reflecting surface, the substantial center of the light-distribution pattern obtained by the first reflecting surface does not exist outside of 30R or 30L on the screen in any configuration.

In the embodiment, the light axis Z2 of the second reflecting surface 7 is deflected outward of the motor vehicle C by an angle θ2 with respect to the axis Z of the light source 5, and the size of the second reflecting surface 7 is about 40mm long x about 60mm wide, as seen from the front in Fig. 8 and Fig. 11. Further, the focal length of the second reflecting surface 7 is about 16mm, and the second reflecting surface 7 comprises three segments 71, 72, and 73, being a free-form surface based on the concave surface in cross section and a concave surface in longitudinal section. The combination of the second reflecting surface 7 having such a configuration and the light source 5 having the above specification is one of the most effective . examples for obtaining the desired intersection light-distribution pattern P2 for positively illuminating the desired intersection light-distribution zone DZ2. Although this combination is one of the most effective examples, it is by no means limited only to this combination. In the second reflecting surface, the substantial center of the light-distribution pattern obtained by the second reflecting surface does not exist inside of 30R or 30L on the screen in any configuration.

In the embodiment, the supplementary light distribution section P6 is distributed inside of the intersection light-distribution pattern P2. As other embodiment of the present invention, however, the supplementary light distribution section may be provided outside of the curve light-distribution pattern P1, or may be provided both outside of the curve light-distribution pattern P1 and inside of the intersection light-distribution pattern P2.

The lighting fixture of the present invention uses an exclusive light source separate from the headlights for vehicles, such as headlamps and fog lamps. Therefore, the side area light-distribution pattern DZ (light-distribution pattern obtained by combining the curve light-distribution pattern DZ1 and the intersection light-distribution pattern DZ2) obtained by the lighting fixture of the present invention is for illuminating the side areas on the road, separately from the light-distribution pattern of the low beam light-distribution pattern and high beam light-distribution pattern of the headlamp, and the fog beam light-distribution pattern of the fog lamp, or by being combined together. The lighting fixture of the present invention may light the light source 5 at all times by the switch operation to irradiate the side area light-distribution pattern DZ at all times, or may light the light source 5 associated with the steering operation, at the time of driving a curve or turning to the right or left at an intersection, to irradiate the side area light-distribution pattern DZ at the time of driving a curve or turning to the right or left at an intersection. Further, the lighting fixture of the present invention may light the left side lighting fixture 4L for vehicles and the right side lighting fixture 4R for vehicles at the same time, or separately.

In the lighting fixture of the present embodiment, the light source 5 is of a C-8 type having a shading top coat 52, but in this invention, a light source 5 of the C-8 type having no top coat 52 may be provided so that the axis Z of the light source 5 becomes parallel with the car line C-C. In this case, since the small end face of the filament of the light source 5 faces forward of the vehicle, the luminous flux of the direct light irradiated forward of the vehicle from the light source 5 is small, with less glaring beams. Further, in this case, a small shade having a simple construction is sufficient for shading the direct light having less luminous flux, and the direct light having less luminous flux can be reliably shaded by the small shade having a simple construction. As a result, the occurrence of glaring beams can be reliably prevented.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A lighting fixture (4L, 4R), for a vehicle (C), that illuminates a side area of a road so as to supplement a light distribution of a headlamp of the vehicle (C), comprising:
a light source (5) that is different from a light source of the headlamp and that emits a light;
a first reflecting surface (6) that reflects the light emitted by the light source (5) so as to illuminate the side area with a long and slender light-distribution pattern; and
a second reflecting surface (7) that reflects the light emitted by the light source (5) so as to illuminate the side area with a wide light-distribution pattern;
wherein the first reflecting surface (6) comprises a free-form surface approximating to a convex surface in cross section and a concave surface in longitudinal section, and
the second reflecting surface (7) comprises a free-form surface approximating to a concave surface in cross section and a concave surface in longitudinal section.

2. The lighting fixture according to claim 1, wherein the long and slender light-distribution pattern is a curve light-distribution pattern (P1) for illuminating a curve light-distribution zone (DZ1) including a curve front area;
the wide light-distribution pattern is an intersection light-distribution pattern (P2) for illuminating an intersection light-distribution zone (DZ2) including the whole area of a pedestrian crossing (CW) and a peripheral area thereof, and
a focal length of the first reflecting surface (6) is longer than that of the second reflecting surface (7).

3. The lighting fixture according to claim 1, wherein the first reflecting surface (6) and the second reflecting surface (7) are connected right and left via a border plane (8),
the first reflecting surface (6) , the border plane (8), and the second reflecting surface (7) form a laterally long rectangle,
the first reflecting surface (6) is arranged inward of the vehicle than the border plane (8), and the second reflecting surface (7) is arranged outward of the vehicle than the border plane (8).

4. The lighting fixture according to claim 1, wherein the first reflecting surface (6) has a longitudinal dimension and a lateral dimension of a laterally long quadrangle suitable for a group of filament images projected from the light source (5) onto the first reflecting surface (6) to form the long and slender light-distribution pattern, and
the second reflecting surface (7) has a longitudinal dimension and a lateral dimension of a quadrangle suitable for a group of filament images projected from the light source (5) onto the second reflecting surface (7) to form the wide light-distribution pattern.

5. The lighting fixture according to claim 1, wherein a light axis (Z1) of the first reflecting surface (6) and a light axis (Z2) of the second reflecting surface (7) point outward of the vehicle (C), with respect to an axis (Z) of the light source (5), and
a deflection angle of the second reflecting surface (7) is larger than that of the first reflecting surface (6).

6. The lighting fixture according to claim 1, the light source (5) having a light emission section (51), wherein an outside end of the second reflecting surface is located backward as compared with the light emission section (51).

7. The lighting fixture according to claim 1, wherein an axis (Z) of the light source (5) is parallel to a car line (C-C) of the vehicle (C).

8. A lighting fixture (4L, 4R), for a vehicle (C), that illuminates a side area on a road so as to supplement a light distribution of a headlamp of the vehicle (C), comprising:
a light source (5) and a reflecting surface that are different from a light source and a reflecting surface of the headlamp, the reflecting surface comprising a first reflecting surface (6) and a second reflecting surface (7), wherein
the first reflecting surface (6) comprises a free-form surface that reflects light from the light source (5) to illuminate a curve light-distribution zone (DZ1) with a curve light-distribution pattern (P1), and
the second reflecting surface (7) comprising a free-form surface that reflects light from the light source (5) to illuminate an intersection light-distribution zone (DZ2) with an intersection light-distribution pattern (P2).

9. The lighting fixture according to claim 8, wherein the curve light-distribution zone (DZ1) is a curve front area in the vicinity of a place where an inside lane line of a curve on the road and a low beam cut line (CL) intersect each other with respect to a direction of movement of the vehicle,
the curve light-distribution pattern (P1) has a high luminous intensity zone (PM) for illuminating the curve front area, the high luminous intensity zone (PM) exists in the range of from about 0.5° above the horizontal line (HL-HR) to about 2.86° below the horizontal line (HL-HR) on the screen, and the substantial center of the curve light-distribution pattern (P1) exists within 30° outside of the light axis of the headlamps for vehicles,
the intersection light-distribution zone (DZ2) includes a pedestrian crossing (CW) and a peripheral area thereof,
the intersection light-distribution pattern (P2) illuminates the pedestrian crossing (CW) and the peripheral area thereof, and the lower end of the intersection light-distribution pattern (P2) exists below a line of about 2.5° down from the horizontal line (HL-HR), and a substantial center of the intersection light-distribution pattern (P2) exists within 30° outside of a light axis of the headlamp.

10. The lighting fixture according to claim 8, wherein the curve light-distribution zone (DZ1) is a laterally long and slender zone enclosed by an apex or a top line in the vicinity of about 5° to the right or left from a vertical line (VU-VD) on a screen, a low beam cut line, and a line passing through a point of intersection of a line of about 2.86° below an horizontal line (HL-HR) on the screen and a line of about 20° from the vertical line (VU-VD) to the right or left,
the curve light-distribution pattern (P1) has a high luminous intensity zone (PM) of 10000 candela or higher for illuminating the curve light-distribution zone (DZ1),
the intersection light-distribution zone (DZ2) is a laterally long and slender zone including the pedestrian crossing (CW) and the peripheral area thereof extended outward and downward from the pedestrian crossing (CW), with the vertical width thereof being wider than the curve light-distribution zone (CZ1),
the intersection light-distribution pattern (P2) has a luminous intensity zone of from 1000 to 2000 candela for illuminating the whole area of the pedestrian crossing (CW), and a luminous intensity zone of 500 candela or higher for illuminating the peripheral area, and
the curve light-distribution pattern (P1) and the intersection light-distribution pattern (P2) are connected continuously and smoothly without a difference in luminous intensity, via a supplementary light distribution section (P6) for connection.
